# FASCICULE DE BREVET EUROPEEN

(11) **EP 0 905 261 B1**
(45) Date de publication et mention de la délivrance du brevet: **17.07.2002**
(21) Numéro de dépôt: 98401645.1
(22) Date de dépôt: 02.07.1998
(51) Int. Cl.: C21C 7/06, C22C 38/00, C22C 38/60

(54) **Acier au carbone ou faiblement allié à usinabilité améliorée et procédé d'élaboration de cet acier**
Kohlenstoffstahl oder niedrig legiertes Stahl mit verbesserter Bearbeitbarkeit und Verfahren zur Herstellung dieses Stahls
Carbon steel or low alloyed steel with improved machinability and process for manufacturing said steel

(30) Priorité: 04.07.1997 FR 9708449
(43) Date de publication de la demande: 31.03.1999
(73) Titulaire: Ascometal, 92800 Puteaux (FR)
(72) Inventeur: Damie, Philippe, 59240 Dunkerque (FR); Turrel, Christian, 34140 Loupian (FR)
(74) Mandataire: Jacobson, Claude

(56) Documents cités:
- EP-A- 0 533 212
- FR-A- 2 212 432
- FR-A- 2 665 461
- US-A- 3 822 735
- US-A- 4 024 624

## Description

La présente invention concerne un acier au carbone ou faiblement allié à usinabilité améliorée, à grains fins, contenant des inclusions d'oxydes et de sulfures, traité au calcium et qui peut être coulé en continu.

Les aciers de construction au carbone ou faiblement alliés à usinabilité améliorée sont bien connus. Le document FR-A-2 655 461 en décrit un exemple. Dans ces aciers, les bonnes propriétés d'usinabilité sont obtenues, notamment, par la présence d'inclusions à base de soufre relativement plastiques et d'inclusions oxydées ayant un point de fusion pas trop élevé, et par l'absence d'inclusions dures abrasives. Les inclusions à base de soufre facilitent l'usinage en favorisant la fragmentation des copeaux d'usinage, ce qui est très souhaitable pour les opérations d'usinage à basse vitesse telles que le perçage. Les inclusions oxydées associées à des sulfures de manganèse riches en calcium permettent d'effectuer des usinages à vitesse élevée en formant sur la surface de contact de l'outil avec le copeau, une couche assurant une fonction de lubrification et une fonction de barrière de diffusion qui ralentissent l'usure de l'outil et permettent d'obtenir un bon état de surface. L'absence d'inclusions dures abrasives évite l'usure de l'outil par le frottement de telles inclusions sur la surface de contact de l'outil avec le copeau.

Les inclusions à base de soufre sont constitué de sulfure de manganèse dans lequel le soufre peut être partiellement substitué par du sélénium ou du tellure, et le manganèse peut être partiellement substitué par du calcium. Le sélénium, le tellure et le calcium ont l'avantage de diminuer la plasticité à chaud des sulfures de manganèse, ce qui évite que ces inclusions s'allongent trop pendant les opérations de mise en forme par déformation plastique à chaud et détériorent trop la ductilité du métal. Cependant, la teneur en calcium des inclusions de sulfure ne doit pas être trop élevée, car, lorsque cette teneur est trop élevée, les inclusions de sulfure mixte de manganèse et de calcium deviennent dures et abrasives. Plus précisément, la teneur en calcium des inclusions sulfurées doit être inférieure à 75 %, et, de préférence, inférieure à 40 %.

Les inclusions oxydées à point de fusion pas trop élevé sont, notamment, des inclusions constituées d'un silico-aluminate de chaux de composition adaptée, en quantité suffisante et bien dispersées. En tout état de cause, ces inclusions ne doivent pas être constituées d'alumine pure, cet oxyde est, en effet, extrêmement dur et se retrouve dans l'acier sous forme d'amas ou d'alignements très abrasifs. Par ailleurs, en général, les aciers de construction doivent contenir un peu d'aluminium pour contrôler la taille du grain, et, de ce fait, ils ne peuvent pas contenir d'inclusions de silice pure, qui, d'ailleurs, ne sont pas souhaitables.

Ces aciers, qui sont obtenus par désoxydation à l'aluminium, resulfuration et injection de calcium ou de SICAL (SilicoCalciumAluminium), ont une composition chimique caractérisés spécifiquement par une teneur en soufre comprise entre 0,025 % et 0,3 %, une teneur en manganèse supérieure à 0,1 %, une teneur en aluminium comprise entre 0, 01 % et 0,05 %, une teneur en oxygène supérieure à 0,002 % et une teneur en calcium supérieure à 0,002 %. Le reste de la composition est celle d'un acier de construction au carbone ou faiblement allié classique, c'est à dire, constituée de fer, de carbone, d'éléments d'alliage, d'azote et d'impuretés résultant de l'élaboration. Ces aciers peuvent contenir en outre des éléments d'addition complémentaires tels que, par exemple, le sélénium, le tellure, le bismuth ou le plomb.

Outre les teneurs en soufre, manganèse, aluminium, oxygène et calcium, les aciers à usinabilité améliorée sont caractérisés par la nature et la quantité des inclusions. La nature des inclusions correspond à ce qui a été défini plus haut. Les quantités sont en relation directe, pour les sulfures, avec la teneur en soufre (et, éventuellement en sélénium ou en tellure), pour les oxydes, avec la teneur en oxygène.

Bien qu'ayant une très bonne aptitude à l'usinage aussi bien à basse vitesse qu'à vitesse élevée, ces aciers présentent au moins deux inconvénients. D'une part, ils nécessitent une teneur en oxygène élevée, et, en conséquence, une teneur importante en inclusions oxydées défavorables à la tenue en fatigue. D'autre part, ils ne peuvent pas être coulés en continu. En effet, l'injection de SICAL ou de calcium conduit à la formation d'amas d'oxydes ou de sulfures qui bouchent les busettes de coulée. De plus, lorsque la teneur en oxygène est insuffisante, l'injection de calcium conduit à la formation de sulfures très riches en calcium, qui sont très durs et abrasifs.

Le but de la présente invention est de remédier à cet inconvénient en proposant un acier de construction au carbone ou faiblement allié à usinabilité améliorée traité au calcium, ayant une teneur en oxygène réduite et pouvant être coulé en continu.

A cet effet, l'invention a pour objet un acier de construction au carbone ou faiblement allié à usinabilité améliorée dont la teneur en carbone est inférieure à 1,5 %, la teneur en Si < 2 %, la teneur en Mn comprise entre 0,1 et 5 %, la teneur en Ni < 6 % la teneur en Cr < 5 % , la teneur en Mo ou W inférieure à 2 % et la somme des teneurs en Si, Mn, Ni, Cr et Mo ou W est inférieure à 9%, contenant des inclusions d'oxydes et de sulfures, sa composition chimique comprenant, en poids :
0,01 % ≤ Al ≤ 0,05 %
0,025 % ≤ S ≤ 0,3%
0,002 % ≤ Ca
O ≤ 0,0015 %
l'état inclusionnaire de cet acier étant caractérisé par un indice de propreté « KO oxydes », selon la norme allemande SEP 1570-71, inférieur à 30, par le fait que toutes les inclusions d'oxydes sont des aluminates de chaux et par une moyenne des teneurs en calcium des inclusions de type 2, de type 3, de type 4 et de type 5 inférieure à 30 %, et de préférence à 25 %.

De préférence, l'acier ne contient pas d'inclusions de type 5.

De préférence, également, les inclusions de type 3 et 4 représentent moins de 30 % des inclusions.

Enfin, il est préférable que la proportion d'inclusions de type 2 soit supérieure à 20 %, et que la moyenne des teneurs en calcium de ces inclusions soit comprise entre 15 % et 25 % de calcium.

Cet acier peut être fabriqué sous forme de produit sidérurgique du type brame, bloom, billette, barre ou fil, coulé en coulée continue.

L'invention concerne également un procédé pour la fabrication d'un produit sidérurgique en acier selon l'invention. Selon ce procédé :
- on élabore un acier liquide désoxydé à l'aluminium,
- on dégaze sous vide l'acier liquide,
- on injecte dans l'acier liquide une poudre constituée d'oxydes dont la température de fusion est inférieure à 1500 °C, de préférence inférieure à 1400°C, et mieux encore, inférieure à 1300°C, et constituée de 50 % à 70 % de SiO₂, 5 % à 25 % de Al₂O₃, de 5 % à 25 % de CaO, de 0 % à 10 % de Fe₂O₃ et FeO, le reste étant des impuretés
- on injecte dans l'acier liquide du calcium,
et on coule l'acier, éventuellement en continu.

La composition de la poudre est, de préférence, choisie de telle sorte que sa température de fusion soit inférieure à 1300 °C.

L'invention concerne, enfin, un fil fourré constitué d'une enveloppe tubulaire fusible dans l'acier liquide et contenant une poudre constituée d'un mélange d'oxydes ayant une température de fusion inférieure à 1400 °C et de préférence inférieure à 1300°C, et constituée de 50 % à 70 % de SiO₂, 5 % à 25 % de Al₂O₃, de 5 % à 25 % de CaO, de 0 % à 10 % de Fe₂O₃ et FeO, le reste étant des impuretés.

L'invention va maintenant être décrite plus en détails, mais de façon non limitative, et va être illustrée par des exemples.

Un acier de construction au carbone ou faiblement allié à usinabilité amélioré est un acier destiné principalement à la fabrication de pièces de mécaniques obtenues par usinage soit d'un lopin d'acier découpé dans un produit sidérurgique laminé, soit par usinage d'une ébauche de pièce obtenue par forgeage. La fabrication de ces pièces de mécanique comporte, en général, un traitement thermique effectué soit sur la pièce, soit sur le produit sidérurgique, soit sur l'ébauche forgée. Ce traitement thermique peut être complété par un traitement de surface. La composition chimique des aciers de construction utilisés pour cet usage est choisie en fonction des propriétés mécaniques souhaitées en fonction de l'usage envisagé pour les pièces, et en fonction de la massivité de celles-ci. Le domaine de composition possible pour ces aciers est très étendu et n'est pas défini avec rigueur. Cependant, ces aciers contiennent, en général :
- du carbone, entre 0% et 1,5% ;
- éventuellement, au moins un élément d'alliage pris parmi le silicium, le manganèse, le nickel, le chrome et le molybdène (parfois remplacé par le tungstène), en des teneurs inférieures à 2% pour le silicium, 5% pour le manganèse, 6% pour le nickel, 5% pour le chrome, et 2% pour le molybdène ; la somme de ces teneurs étant, en général, inférieure à 9 % ;
- éventuellement, au moins un élément de micro-alliage pris parmi le titane, le niobium et le vanadium, en des teneurs inférieures à 1% , et, éventuellement également, du bore, en des teneurs généralement inférieures à 0,002 % .
Outre ces éléments principaux qui définissent les aciers de construction, la composition chimique comporte :
- en général, de l'aluminium, le plus souvent en des teneurs inférieures à 0,1 % ;
- éventuellement des éléments tels que le soufre, le tellure, le sélénium, le bismuth, le plomb ou les terres rares, destinés à améliorer l'usinabilité ; lorsqu'ils sont présents, ces éléments sont, ont, en général, des teneurs inférieures à 0,3 % ;
- de l'azote, des impuretés et des résiduels résultant de l'élaboration, en particulier, de l'oxygène ; la teneur en azote est, en général inférieure à 0,03 %.
Le reste est du fer, dont la teneur est supérieure à 90%.

Pour fabriquer un tel acier, on élabore au convertisseur ou au four électrique, un acier liquide brut qui est en suite versé dans une poche. Dans la poche, on effectue les opérations classiques de métallurgie en poche destinées, notamment, à désoxyder l'acier par ajout d'aluminium, et à ajuster la composition chimique par addition de ferro-alliages. L'acier liquide est alors dégazé par traitement sous vide, par exemple par passage au RH. L'acier ainsi obtenu, qui est pratiquement prêt à être coulé pour obtenir un demi produit solide, est caractérisé, outre par sa température et par les teneurs en carbone et éléments d'alliage ou de micro-alliage, par ses teneurs en oxygène, aluminium, soufre et manganèse, teneurs qui sont essentielles pour l'invention.

L'aluminium qui est, pour une part, sous forme d'aluminium dissout dans l'acier, et, pour une autre part, sous forme de particules d'alumine, a une teneur comprise entre 0,01 % et 0,05 %.

L'oxygène, pour l'essentiel, est combiné à l'aluminium dans les particules d'alumine. Sa teneur est inférieure à 0,0015 %. Cette teneur est particulièrement importante puisqu'elle représente, en fait, la quantité de particules d'alumine présentes dans l'acier, et ces particules ont une incidence très significative sur les propriétés de l'acier.

Le soufre, dissout dans l'acier liquide en quantité comprise entre 0,025 % et 0,3 %, est destiné à former, dans l'acier solide, des inclusions de sulfure d'éléments avides de soufre, tels que le manganèse ou le calcium. Ces inclusions sont d'autant plus nombreuses et donc efficaces pour améliorer l'usinabilité de l'acier, que la teneur en soufre est élevée. Cependant, ces inclusions détériorent certaines propriétés mécaniques de l'acier, telles que la ductilité, ce qui conduit à limiter la teneur en soufre à des valeurs pas trop élevées.

Le manganèse a plusieurs effets sur les propriétés de l'acier, et, en particulier de se combiner au soufre ainsi qu'à d'autres éléments de la même famille, par exemple, au sélénium ou au tellure. Sa teneur doit être suffisante pour que, associé aux autres éléments avides de soufre, tout le soufre et les éléments de la même famille puisse se retrouver, dans l'acier solide, sous forme d'inclusions du type sulfures. La teneur minimale en manganèse doit, pour cela, être supérieure à 0,1 %.

L'acier liquide ayant les caractéristiques qui viennent d'être décrites, n'est pas tout à fait prêt à être coulé. En effet, afin d'obtenir des inclusions ayant les propriétés souhaitées, à savoir, l'absence d'alumine pure, la présence d'aluminates de chaux, la présence de sulfures mixtes de manganèse et de calcium contenant moins de 30 %, et de préférence moins de 25% de calcium, les inclusions d'oxydes étant, de préférence, associées à des sulfures, les inclusions de sulfure contenant de préférence entre 15 % et 25 % de calcium, il est nécessaire d'introduire du calcium dans l'acier. Par ailleurs, les inventeurs ont constaté que, pour que l'introduction de calcium se fasse dans des conditions satisfaisantes et donne le résultat souhaité, et notamment, une quantité suffisante d'inclusions d'oxydes, l'introduction du calcium devait être précédée de l'introduction dans l'acier de particules oxydées convenablement choisies.

Avant de couler l'acier, on introduit dans l'acier liquide un mélange de silice, d'alumine, de chaux et d'oxydes de fer ayant un point de fusion inférieur à 1500 °C, et de préférence inférieur à 1300 °C, puis, on introduit le calcium par toute méthode connue de l'Homme du Métier, par exemple, à l'aide d'un fil fourré.

La composition chimique du mélange de silice, d'alumine, de chaux et d'oxydes de fer, comprend :

| | |
|---|---|
| SiO₂ | de 50 % à 70 %, de préférence, environ 60 % |
| Al₂O₃ | de 5 % à 25 %, de préférence, environ 16 % |
| CaO | de 5 % à 25 %, de préférence, environ 15 % |
| Fe₂O₃ et FeO | de 0 % à 10 %, de préférence, environ 6 % |

Ce mélange, qui, en outre, peut comprendre des impuretés, est fabriqué sous forme d'un mélange de poudres fritté à haute température et contenu dans une enveloppe tubulaire en acier doux, de façon à être présente sous forme d'un fil fourré.

Le mélange peut, avantageusement, être obtenu par un mélange d'environ 40 % de ciment hydraulique alumineux à base de clincker fondu et d'environ 60 % de farine de sable de quartz.

Une fois traité au calcium, l'acier liquide est coulé pour être solidifié sous forme de demi-produits qui sont mis en forme par déformation plastique, par exemple, par laminage ou par forgeage, de façon à obtenir, selon le cas, soit un produit sidérurgique, soit une ébauche forgée de pièce. La coulée peut se faire en lingotière, mais elle peut aussi, et c'est l'un des avantages majeurs de l'invention, se faire en coulée continue de billettes, de blooms ou de brames.

L'acier solide ainsi obtenu contient, bien évidemment, les teneurs en carbone et éléments d'alliage ou de micro-alliage caractéristiques de la nuance d'acier considérée, mais il contient, en outre, d'une part le soufre, d'autre part, du calcium et de l'oxygène, tous éléments qui se retrouvent sous forme d'inclusions. De façon surprenante, les inventeurs ont constaté, que, malgré l'introduction du mélange d'oxydes décrit plus haut, la teneur en oxygène n'était pas modifiée et restait inférieure à 0,0015 %. De plus, la teneur en calcium est supérieure à 0,002% (cet élément très peu soluble dans l'acier est présent essentiellement dans les inclusions, sat eneur moyenne dans l'acier dépasse rarement 0,1 %). La composition chimique de l'acier est donc caractérisée par les teneurs suivantes :
0,01 % ≤ Al ≤ 0,05 %
0,025 % ≤ S ≤ 0,3 %
0,002 % ≤ Ca
O ≤ 0,0015 %

Pour caractériser l'état inclusionnaire de l'acier d'une part, on détermine un indice « KO oxydes » selon la norme allemande SEP 1570-71, d'autre part, à l'aide d'un microscope électronique à balayage couplé avec un analyseur d'images et un dispositif d'analyse chimique par électrons retrodiffusés (EDS), on détermine par comptage automatique la proportion d'inclusions appartenant à chacune des classes suivantes :
- type 1 : sulfures filiformes,
- type 2 : sulfures globulaires,
- type 3 : sulfures contenant un ou plusieurs oxydes,
- type 4 : sulfures et oxydes accolés,
- type 5 : oxydes seuls.
On détermine également la teneur moyenne en calcium des inclusions appartenant à chacune de ces classes. Cette teneur en calcium correspondant à la proportion de manganèse qui est substitué par du calcium dans les sulfures (valeur de x dans la formule Mn₁₋ₓCaₓS). Le comptage se fait sur une population de plus de 200 inclusions. Les sulfures filiformes se distinguant des sulfures globulaires par leur facteur de forme défini par le rapport de la longueur L à la largeur I. Pour le type 1, L/l est supérieur à 3, pour le type 2, L/l est inférieur à 3.

La population inclusionnaire de l'acier obtenu par le procédé selon l'invention est telle que :
- l'indice « KO oxydes » est inférieur à 30,
- toutes les inclusions oxydées sont des aluminates de chaux,
- la moyenne des teneurs en calcium des inclusions de type 2, de type 3, de type 4 et de type 5 est inférieure à 30 %, et, en général, comprise entre 15 % et 25 %,
- la moyenne des teneurs en calcium des inclusions de type 5 est inférieure à 30 %,
- en général, plus de 75 % des inclusions oxydées sont associées à des inclusions de sulfures,
- la moyenne des teneurs en calcium des inclusions de type 1 est, en général, comprise entre 1 % et 2 %.
A noter que les compositions des inclusions peuvent être déterminées par analyse à la microsonde ou à la macrosonde électronique.
Ce sont ces caractéristiques de l'état inclusionnaire qui permettent d'obtenir une bonne usinabilité en usinage à vitesse élevée, par exemple en tournage.

On peut noter que l'Homme du Métier peut distinguer facilement les produits obtenus par coulée continue des produits obtenus par coulée en lingots en effectuant des examens métallographiques classiques.

L'invention va maintenant être illustrée par des exemples conformes à l'invention et des contre exemples selon l'art antérieur.

Tous les exemples concernent des aciers de construction du type 42CrMo4, et 39NiCrMo selon la norme européenne EN 10083.1 et un acier 27CrMo4 destiné à des applications dans l'automobile, dont les compositions nominales (composition moyenne visée pour les éléments principaux) sont, en % en poids :

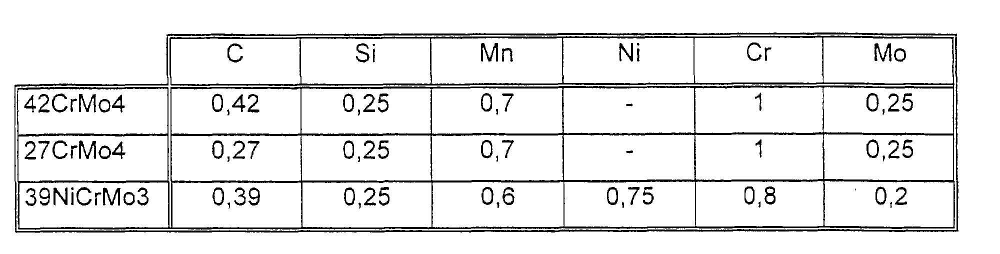

Ces aciers ont été élaborés en visant une teneur en soufre d'environ 0,03%, et ils ont été désoxydés à l'aluminium. On a réalisé des coulées :
- AC, conformes à l'invention (dégazées, injection d'un fil fourré d'oxydes, injection de calcium), coulées en continu,
- BC, à titre de comparaison, dégazées, avec injection de calcium (sans injection de fil fourré d'oxydes), coulées en continu,
- AL, à titre de comparaison, non dégazées, avec injection de calcium (sans injection de fil fourré d'oxydes), coulées en lingots,
- CL, à titre de comparaison, dégazées, sans injection de calcium ni de fil fourré d'oxydes, coulées en continu,

Les coulées AC, BC et AL correspondent à des aciers à usinabilité améliorée. Les coulées CL correspondent à un acier standard qui n'est pas à usinabilité améliorée.

Toutes les coulées, sauf celles qui n'ont pu être coulées de façon satisfaisante en coulée continue, ont été laminées à chaud pour former des ronds de 100 mm de diamètre environ qui ont été trempés et revenus pour leur conférer leurs propriétés d'utilisation. On a alors déterminé les teneurs en aluminium, oxygène, soufre et calcium, caractérisé l'état inclusionnaire et évalué l'usinabilité en tournage par la mesure de l'indice V20B0.3 (selon la norme ISO 3685), en donnant, pour l'usinabilité, l'indice 100 aux coulées CL.

On a obtenu les résultats suivants
- conditions de coulée et analyse chimique (en % en poids) : 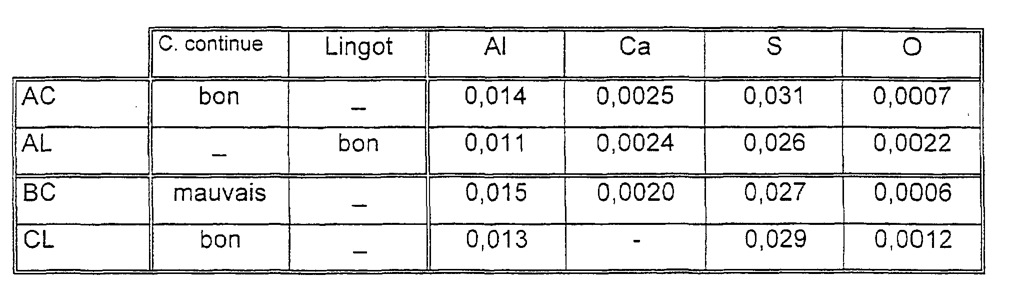
- état inclusionnaire et usinabilité:

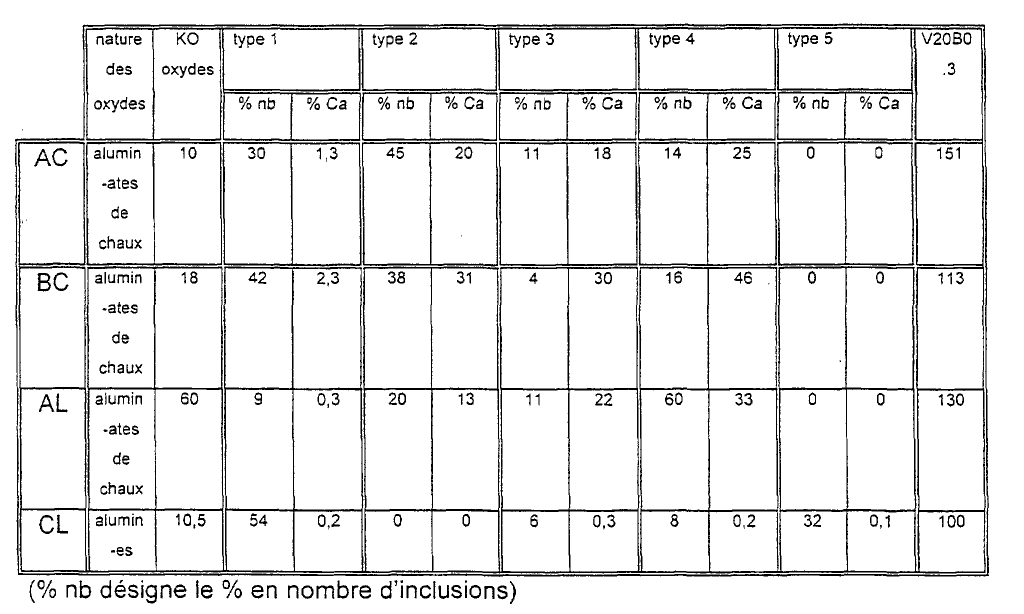

Ces résultats montrent bien que :
- l'acier selon l'invention peut se couler en continue, alors qu'un acier semblable, dégazé et traité au calcium sans injection de fil fourré d'oxydes (coulées BC) pose des problèmes, pour ces coulées, en effet, la coulée continue a été gênée par des bouchages de busettes ;
- l'acier selon l'invention (coulées AC) présentent une usinabilité meilleure que celles des aciers à usinabilité améliorés non dégazés conformément à l'art antérieur (coulées AL), et cela, malgré une teneur en aluminates de chaux très sensiblement plus faible et un indice « KO oxydes » plus faible.

## Revendications

1. Acier au carbone ou faiblement allié à usinabilité améliorée dont la teneur en carbone est inférieure à 1,5 %, dont la teneur en silicium est inférieure à 2%, dont la teneur en manganèse est comprise entre 0,1 et 5%, dont la teneur en nickel est inférieure à 6%, dont la teneur en chrome est inférieure à 5% et dont la teneur en molybdène ou tungstène est inférieure à 2%, la somme des teneurs en Si, Mn, Ni, Cr et Mo ou W étant inférieure à 9%, contenant des inclusions d'oxydes et de sulfures, sa composition chimique comprenant, en poids
0,01% ≤ Al ≤ 0,05%
0,025% ≤ S ≤ 0,3%
0,002% ≤ Ca
**caractérisé en ce que** sa teneur en O est inférieure à 0,0015%, **en ce que** son indice de propreté « KO oxydes », selon la norme allemande SEP 1570-71, est inférieur à 30, **en ce que** tous les oxydes sont des aluminates de chaux, et **en ce que** la moyenne des teneurs en calcium des inclusions de type 2, de type 3, de type 4 et de type 5 est inférieure à 30%.

2. Acier selon la revendication 1, **caractérisé en ce qu'**il comprend également au moins un élément pris parmi le titane, le niobium et le vanadium, en des teneurs inférieures à 1%.

3. Acier selon la revendication 1 ou 2, **caractérisé en ce qu'**il comprend également du bore à une teneur inférieure à 0,002%.

4. Acier selon l'une des revendications 1 à 3, **caractérisé en ce qu'**il ne contient pas d'inclusions de type 5.

5. Acier selon l'une des revendications 1 à 4, **caractérisé en ce que** les inclusions de type 3 et de type 4 constituent moins de 30% des inclusions.

6. Acier selon l'une quelconque des revendications 1 à 5, **caractérisé en ce que** la proportion d'inclusions de type 2 est supérieure à 30% et **en ce que** la moyenne des teneurs en calcium des inclusions est comprise entre 15% et 25%.

7. Produit sidérurgique du type brame, bloom, billette, barre ou fil, **caractérisé en ce qu'**il est constitué d'un acier selon l'une quelconque des revendications 1 à 6, et **en ce qu'**il a été coulé en coulée continue.

8. Procédé pour la fabrication d'un produit sidérurgique en acier selon l'une quelconque des revendications 1 à 6, **caractérisé en ce que** :
- on élabore un acier liquide désoxydé à l'aluminium,
- on dégaze sous vide l'acier liquide,
- on injecte dans l'acier liquide une poudre constituée d'oxydes dont la température de fusion est inférieure à 1500°C, et constituée de 50% à 70% de SiO₂, 5% à 25% de Al₂O₃, 5% à 25% de CaO, 0 à 10% de Fe₂O₃ et FeO, le reste étant des impuretés,
- on injecte dans l'acier liquide du calcium,
et on coule l'acier.

9. Procédé selon la revendication 8, **caractérisé en ce que** la poudre d'oxydes a une température de fusion inférieure à 1300°C.

10. Procédé selon la revendication 8 ou 9 **caractérisé en ce que** l'acier est coulé en continu.

11. Fil fourré pour la mise en oeuvre du procédé selon l'une quelconque des revendications 8 à 10, constitué d'une enveloppe tubulaire fusible dans l'acier liquide et contenant une poudre, **caractérisé en ce que** la poudre est constituée d'un mélange d'oxydes ayant une température de fusion inférieure à 1400°C et de composition 50% à 70% de SiO₂, 5% à 25% de Al₂O₃, de 5% à 25% de CaO, de 0% à 10% de Fe₂O₃ et FeO, le reste étant des impuretés.

## Claims

1. Carbon steel or low alloyed steel with improved machinability, of which the content of carbon is less than 1.5%, of which the content of silicon is less than 2%, of which the content of manganese is between 0.1 and 5%, of which the content of nickel is less than 6%, of which the content of chrome is less than 5% and of which the content of molybdenum or tungsten is less than 2%, the sum of the contents in Si, Mn, Ni, Cr, Mo or W being less than 9%, containing inclusions of oxides and sulphides, its chemical composition comprising by weight:
0.1% £ Al £ 0.05%
0.025% £ S £ 0.3%
0.002% £ Ca
**characterised in that** its content of O is less than 0.0015%, **in that** its index of cleanness "KO oxides", according to the German standard SEP 1570-71, is less than 30, **in that** all the oxides are lime aluminates, and **in that** the average of the contents in calcium of the inclusions of type 2, type 3, type 4 and type 5 is less than 30%.

2. Steel according to claim 1, **characterised in that** it comprises likewise at least one element taken from titanium, niobium and vanadium in quantities less than 1%.

3. Steel according to claim 1 or 2, **characterised in that** it comprises likewise boron with a content of less than 0.002%.

4. Steel according to one of the claims 1 to 3, **characterised in that** it does not contain inclusions of type 5.

5. Steel according to one of the claims 1 to 4, **characterised in that** the inclusions of type 3 and of type 4 form less than 30% of the inclusions.

6. Steel according to any of the claims 1 to 5, **characterised in that** the proportion of inclusions of type 2 is greater than 30% and **in that** the average of the contents of calcium of the inclusions is between 15% and 25%.

7. Ferrous metallurgic product of the type slab, bloom, billet, bar or wire, **characterised in that** it is formed from a steel according to any of the claims 1 to 6, and **in that** it has been cast by continuous casting.

8. Method for the manufacture of a ferrous metallurgic product in steel according to any of the claims 1 to 6, **characterised in that**:
- a liquid de-oxidised steel is made with aluminium,
- the liquid steel is degassed under vacuum,
- there is injected into the liquid steel a powder formed from oxides, the fusion temperature of which is less than 1500 °C and formed from 50% to 70% of SiO₂, 5% to 25 % of Al₂O₃, 5% to 25% of CaO, 0 to 10% of Fe₂O₃ and FeO, the residue being impurities,
- calcium is injected into the liquid steel,
and the steel is cast.

9. Method according to claim 8, **characterised in that** the oxide powder has a fusion temperature of less than 1300 °C.

10. Method according to claim 8 or 9, **characterised in that** the steel is cast continuously.

11. Packed wire for implementation of the method according to any of the claims 8 to 10, formed from a tubular casing which is fusible in the liquid steel and containing a powder, **characterised in that** the powder is formed from a mixture of oxides having a fusion temperature of less than 1400 °C and with a composition of 50% to 70 % of SiO₂, 5% to 25 % of Al₂O₃, 5% to 25% of CaO, 0% to 10% of Fe₂O₃ and FeO, the residue being impurities.

## Patentansprüche

1. Kohlenstoffstahl oder schwach legierter Stahl mit verbesserter Bearbeitbarkeit, dessen Gehalt an Kohlenstoff unter 1,5% beträgt, dessen Siliciumgehalt unter 2% beträgt, dessen Mangangehalt 0,1 bis 5% beträgt, dessen Nickelgehalt unter 6% beträgt, dessen Chromgehalt unter 5% beträgt und dessen Molybdän- oder Wolframgehalt unter 2% beträgt, wobei die Summe der Gehalte an Si, Mn, Ni, Cr und Mo oder W unter 9% betragen, und der Einschlüsse von Oxiden und Sulfiden enthält, wobei seine chemische Zusammensetzung, bezogen auf das Gewicht, folgendes umfasst:
0,01% ≤ Al ≤ 0,05%
0,025% ≤ S ≤ 0,3%
0,002% ≤ Ca
**dadurch gekennzeichnet, dass** sein Gehalt an O unter 0,0015% beträgt, dass sein Reinheitsindex "KO Oxide" gemäß der deutschen Norm SEP 1570-71 unter 30 liegt, dass alle Oxide Kalkaluminate sind und dass der Mittelwert der Calciumgehalte der Einschlüsse vom Typ 2, vom Typ 3, vom Typ 4 und vom Typ 5 unter 30% beträgt.

2. Stahl nach Anspruch 1, **dadurch gekennzeichnet, dass** er ferner mindestens ein aus Titan, Niob und Vanadium ausgewähltes Element in Gehalten unter 1% enthält.

3. Stahl nach Anspruch 1 oder 2, **dadurch gekennzeichnet, dass** er ferner Bor in einem Gehalt unter 0,002% enthält.

4. Stahl nach einem der Ansprüche 1 bis 3, **dadurch gekennzeichnet, dass** er keine Einschlüsse vom Typ 5 enthält.

5. Stahl nach einem der Ansprüche 1 bis 4, **dadurch gekennzeichnet, dass** die Einschlüsse vom Typ 3 und vom Typ 4 weniger als 30% der Einschlüsse darstellen.

6. Stahl nach einem der Ansprüche 1 bis 5, **dadurch gekennzeichnet, dass** der Anteil an Einschlüssen vom Typ 2 größer als 30% ist und dass der Mittelwert der Calciumgehalte der Einschlüsse zwischen 15% und 25% beträgt.

7. Stahlerzeugniss vom Typ Bramme, Barren, Block, Stab oder Draht, **dadurch gekennzeichnet, dass** es aus einem Stahl nach einem der Ansprüche 1 bis 6 besteht und dass es im Strangguss gegossen wurde.

8. Verfahren zur Herstellung eines Stahlerzeugnisses aus einem Stahl nach einem der Ansprüche 1 bis 6, **dadurch gekennzeichnet, dass**
- man einen mit Aluminium desoxidierten flüssigen Stahl herstellt,
- man den flüssigen Stahl unter Vakuum entgast,
- man in den flüssigen Stahl ein Pulver einspritzt, das aus Oxiden besteht, deren Schmelztemperatur unter 1500°C liegt, und das aus 50% bis 70% SiO₂, 5% bis 25% Al₂O₃, 5% bis 25% CaO, 0 bis 10% Fe₂O₃ und FeO besteht, wobei der Rest Verunreinigungen sind,
- man in den flüssigen Stahl Calcium einspritzt
- und man den Stahl gießt.

9. Verfahren nach Anspruch 8, **dadurch gekennzeichnet, dass** das Oxidpulver eine Schmelztemperatur unter 1300°C besitzt.

10. Verfahren nach Anspruch 8 oder 9, **dadurch gekennzeichnet, dass** der Stahl stranggegossen wird.

11. Gefüllter Draht zur Durchführung des Verfahrens nach einem der Ansprüche 8 bis 10, bestehend aus einer im flüssigen Stahl schmelzbaren und ein Pulver enthaltenden rohrförmigen Hülle, **dadurch gekennzeichnet, dass** das Pulver aus einer Mischung von Oxiden besteht, die eine Schmelztemperatur unter 1400°C besitzt und die Zusammensetzung 50% bis 70% SiO₂, 5% bis 25% Al₂O₃, 5% bis 25% CaO, 0% bis 10% Fe₂O₃ und FeO hat, wobei der Rest Verunreinigungen sind.
